# EUROPEAN PATENT SPECIFICATION

(11) **EP 2 113 473 B1**
(45) Date of publication and mention of the grant of the patent: **22.02.2012**
(21) Application number: 08008341.3
(22) Date of filing: 02.05.2008
(51) Int. Cl.: B65G 1/04, B65G 1/137

(54) **Device for transfer of objects for combination with a shelf unit**
Vorrichtung für den Objekttransfer zur Kombination mit einer Regaleinheit
Dispositif de transfert d'objets à combiner avec une unité d'étagère

(43) Date of publication of application: 04.11.2009
(73) Proprietor: von Liechtenstein, Alexander, 9497 Triesenberg (LI)
(72) Inventor: von Liechtenstein, Alexander, 9497 Triesenberg (LI)
(74) Representative: Lunati, Vittoriano

(56) References cited:
- DE-U1- 9 315 118

## Description

The present invention concerns a device for transfer of objects which can be combined with a shelf unit, and an automatic shelf unit comprising said transfer device of the type specified in the preamble of the first claim.

Transfer devices and related automatic shelf units are currently known, in particular for small objects weighing less than 2 kg.

Automatic shelf units permit automatic storage and retrieval of the objects contained. They offer various advantages, for example a very small space for storage of the objects, since there is no need to provide space for the movement of an operator, greater rapidity in retrieval and conveying of the objects, reduced use of personnel etc..

The automatic storage procedure comprises various phases.

Firstly the objects to be stored, for example packages of various types, are appropriately identified and catalogued, by scanning of the barcode or similar. The dimensions of the object are then processed by a computer which studies the best position for said object in the shelf units.

The object is then placed in a transfer device which conveys it to the position identified on the shelf units and deposits it inside them.

Once the object has been positioned, it may be necessary to withdraw it from the shelf unit.

In this case said object must be requested via the computer, which has the position of the object stored in memory.

The transfer device is then moved near the object to be withdrawn, withdraws it and conveys it to an appropriate position, which can be reached by the user. Structurally, the automatic shelf units consist of shelves facing one another and interlocked to one single transfer device.

Said transfer device consists substantially of a movable platform, which can move along the main plane of the shelf units and serves shelf units facing each other.

The above known technique has some important drawbacks.

In particular, said transfer devices are complex and costly, since they have to perform different operations for loading and unloading from the shelf units and loading and unloading from the work bench.

Furthermore, said transfer devices are often very bulky and therefore defeat the advantage of the reduced space of the automatic shelf units.

The high volume occupied is also due to the fact that the conveying devices must be able to transfer the objects onto different shelves, and space must therefore be provided for positioning said movable platform along different paths and in different directions.

A further drawback is the fact that the transfer devices are able convey one single object for each transfer, and said characteristic slows down the loading and unloading operations.

Said drawback is particularly important in the unloading phase when, in particular in shops or similar, rapid delivery of the objects is required.

In this situation the technical aim of the present invention is to provide a device for the transfer of objects and an automatic shelf unit comprising said transfer device able to substantially remedy the above-mentioned drawbacks.

In the context of said technical aim, an important object of the invention is to obtain a transfer device which is able to rapidly convey the objects, in particular in the unloading phase.

Another important object of the invention is to produce a transfer device which can be functionally correlated with two different shelves facing each other and which occupies very little space, permitting a closer reciprocal arrangement of said shelves.

Last but not least, a further aim of the invention is to provide a transfer device with a simple structure.

The technical aim and the objects specified are achieved by a device for transferring objects which can be combined with a shelf unit as described in Claim 1, and by an automatic shelf unit comprising said device for transferring objects.

In particular the technical aim specified is achieved by a transfer device comprising a supporting section which moves between a loading configuration, in which it supports at least one object, and an unloading configuration, in which the object is transferred by gravity into a collecting container suitable for containing a plurality of objects.

Further characteristics and advantages of the invention are better clarified below in the detailed description of a preferred embodiment of the invention, with reference to the accompanying drawings, in which:
**Fig. 1a** shows the transfer device according to the invention, in a lateral view, during a first moment of the loading phase of an object;
**Fig. 1b** shows the transfer device, in a lateral view, during a second moment of the loading phase of an object;
**Fig. 2a** illustrates the transfer device, in a lateral view, during a first moment of the transfer phase of an object towards a shelf unit;
**Fig. 2b** illustrates the transfer device, in a lateral view, during a second moment of the transfer phase of an object towards a shelf unit;
**Fig. 3a** highlights the transfer device, in a lateral view, during a first moment of the withdrawal phase of an object from the shelf unit;
**Fig. 3b** highlights the transfer device, in a lateral view, during a second moment of the withdrawal phase of an object from the shelf unit;
**Fig. 3c** highlights the transfer device, in a lateral view, during a third moment of the withdrawal phase of an object from a shelf unit;
**Fig. 3d** highlights the transfer device, in a lateral view, during a different withdrawal phase of an object from a shelf unit;
**Fig. 4a** shows the transfer device, in a lateral view, during a first moment of the unloading phase of an object;
**Fig. 4b** shows the transfer device, in a lateral view, during a second moment of the unloading phase of an object;
**Fig. 5a** shows the transfer device, in a lateral view, positioned at a first angle;
**Fig. 5b** shows the transfer device, in a lateral view, positioned at a second angle;
**Fig. 6a** illustrates the transfer device, in an overhead view, positioned at a first angle;
**Fig. 6b** illustrates the transfer device, in an overhead view, positioned at a second angle;
**Fig. 6c** illustrates the transfer device, in an overhead view, positioned at a third angle;
**Fig. 7** illustrates an automatic shelf unit including the transfer device, in a lateral view; and
**Fig. 8** illustrates an automatic shelf unit including the transfer device, in an overhead view.

With reference to the above figures, the transfer device according to the invention is indicated overall by the number **1.**

Said transfer device is suitable for combination with a shelf unit **100**, which comprises at least one storage surface **101**, defined by shelves **103** of accumulation units **102.**

The shelf unit 100 together with at least one transfer device 1 constitutes an automatic shelf unit **200**, in particular an automatic shelf unit 200 for shops and similar. In fact, the characteristics of the automatic shelf unit 200 are particularly suitable for the storage of objects **2** consisting of small parallelepiped packages weighing less than 1 or 2 kg in several hundreds, if not thousands, of different types.

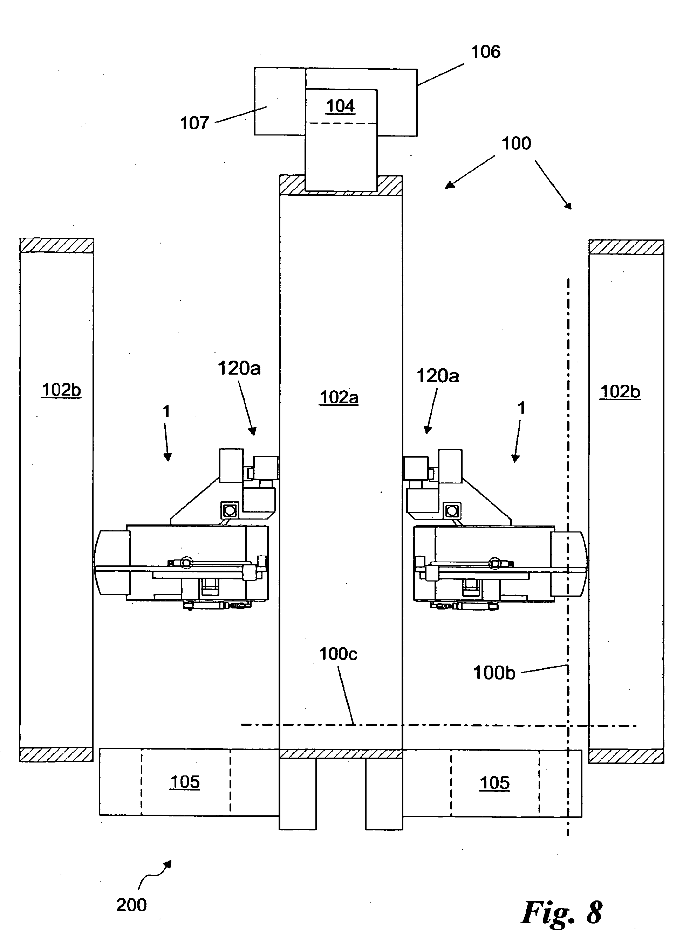

In detail, the shelf unit 100 comprises preferably at least two accumulation units 102 facing one another and more preferably at least one group of three accumulation units 102 (Fig. 8 and 9), in which a central unit **102a** faces two lateral units **102b.**

The shelf unit 100 furthermore comprises a loading area **104**, in which the objects 2 to be stored are placed, and an unloading area **105**, in which the objects 2 that have just been withdrawn from the storage surfaces 101 are placed.

In particular, the loading area 104 is located near an area that can be accessed by the users and at a height which can be easily reached by said personnel without the use of ladders or similar. The loading area 104 can furthermore be reached by means of a conveyor belt or similar.

Lastly, the loading area 104 can be served by a device for isolating individual objects 2, for example the device described in the patent application EP1854749.

Near the loading area 104, control means **106** for the device 1 are appropriately positioned, appropriately consisting of a computer and identification means **107** for the objects 2, appropriately consisting of a barcode reader or similar, suitable for identifying the objects 2.

The unloading area 105 can be of different types. In particular, it can consist of an area similar to the loading area 104, or comprise a chute or similar suitable for conveying the objects 2, and in particular various packages, to the counter of the shop or similar.

The device 1 also moves along the shelf unit 100, in particular the storage surface 101, of the loading area 104 and unloading area 105. In particular the device 1 moves preferably in a vertical direction **100a** and in a longitudinal direction **100b** perpendicular to said vertical direction and parallel to the main plane of the accumulation units 102. A transverse direction **100c** perpendicular to said vertical direction 100a and longitudinal direction 100b is furthermore defined for purely descriptive purposes.

The transfer device 1 comprises, summarily, a supporting section **3**, suitable for supporting at least one object 2, a handling mechanism **4**, connected to the supporting section 3, suitable for transferring at least one object 2 between the supporting section 3 and the storage surface 101 or the loading area 104 or unloading area 105, a collecting container **5** suitable for containing a plurality of objects 2 and connected to the supporting section 3, and conveying means **6** suitable for transferring the objects 2 contained in the container 5 to the unloading area 105 or to an adjacent area.

The supporting section 3, the collecting container 5 and the handling mechanism 6 furthermore define a transfer unit **13**, developed according to a first axis **13a** and a second axis **13b r**eciprocally perpendicular and positioned in the horizontal plane, perpendicular to the vertical direction 100a.

In detail, the collecting container 5 comprises a supporting surface 7, suitable for constituting a support for objects 2 contained in the same container 5, two lateral walls **8**, suitable for constituting sideboards to prevent the objects 2 contained in the container 5 from falling out, and a movable panel **9**, also suitable for supporting the objects 2 contained in the container 5.

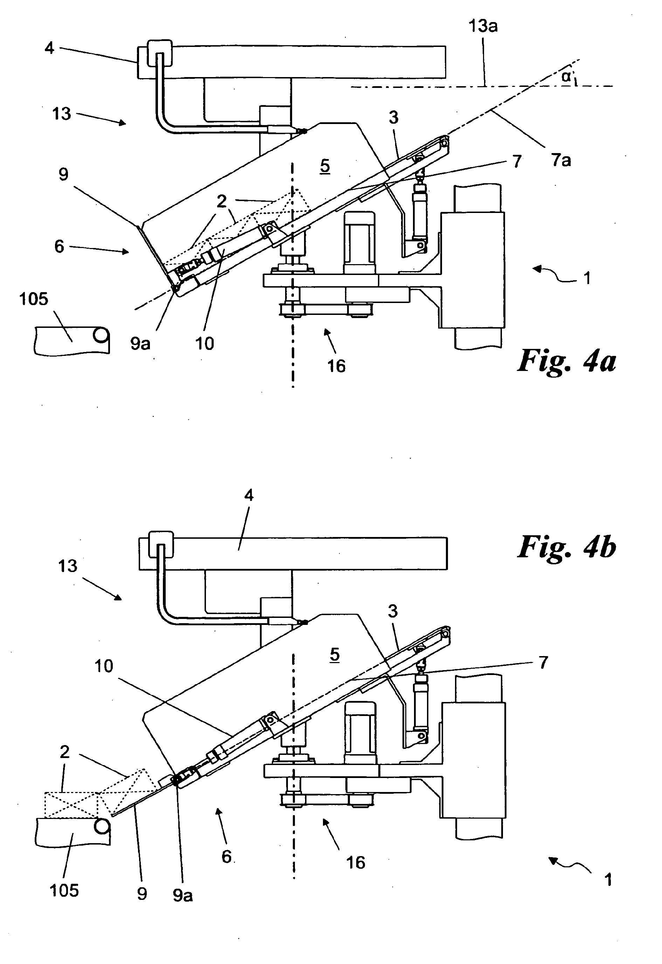

The movable panel 9 can furthermore be rotated around a rotation axis **9a** parallel to the second axis 13b. In particular, the movable panel 9 consists substantially of a flat plate and its rotation around the first axis 9a sets it to the closing position, as illustrated in Fig. 4a, i.e. perpendicular to the supporting surface 7, thus constituting a front board for the container 5, or to the opening position, as illustrated in Fig. 4b, in which it is aligned with the supporting surface 7.

Lastly, the movable panel 9 is moved preferably by means of a first hydraulic cylinder **10** hinged to the container 5 and positioned on the outside of the same. The supporting section 3 consists substantially of a plate supported by a rod **11**, integral with the container 5, and connected to it by means of a rotational hinge **12** having an axis of rotation parallel to the second axis 13b.

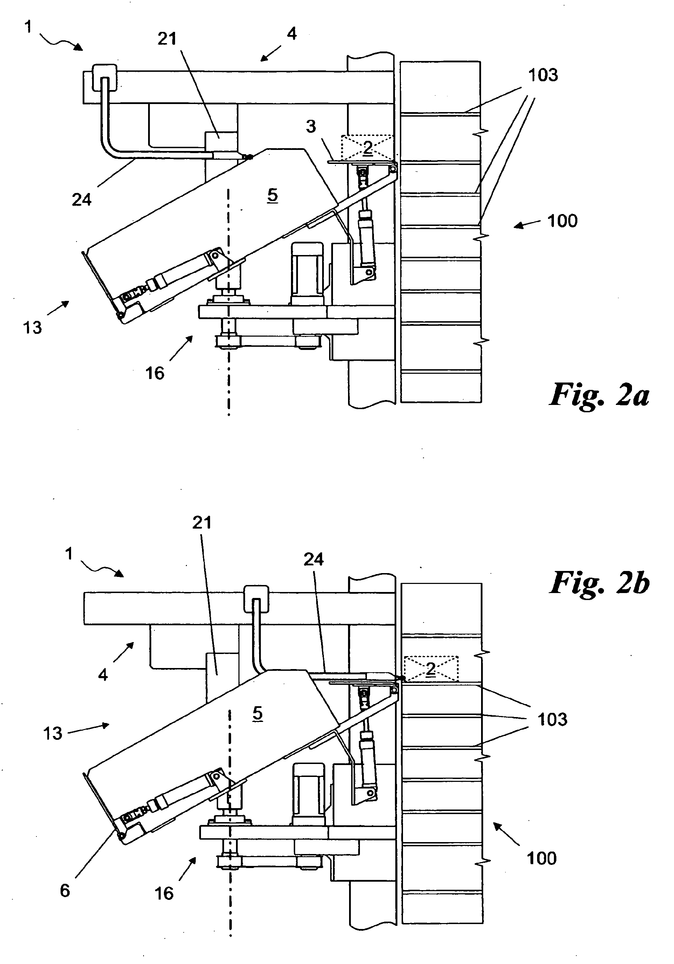

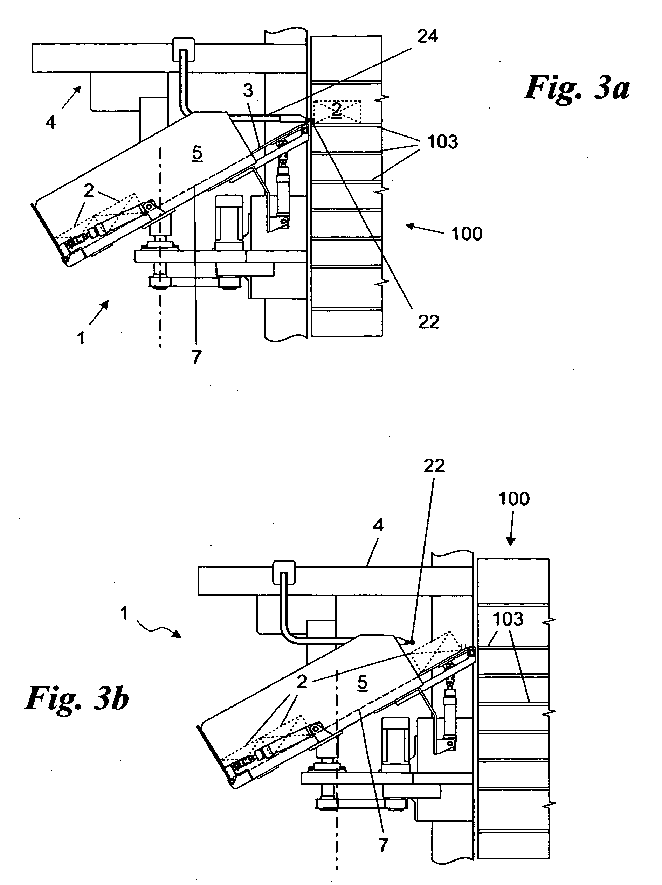

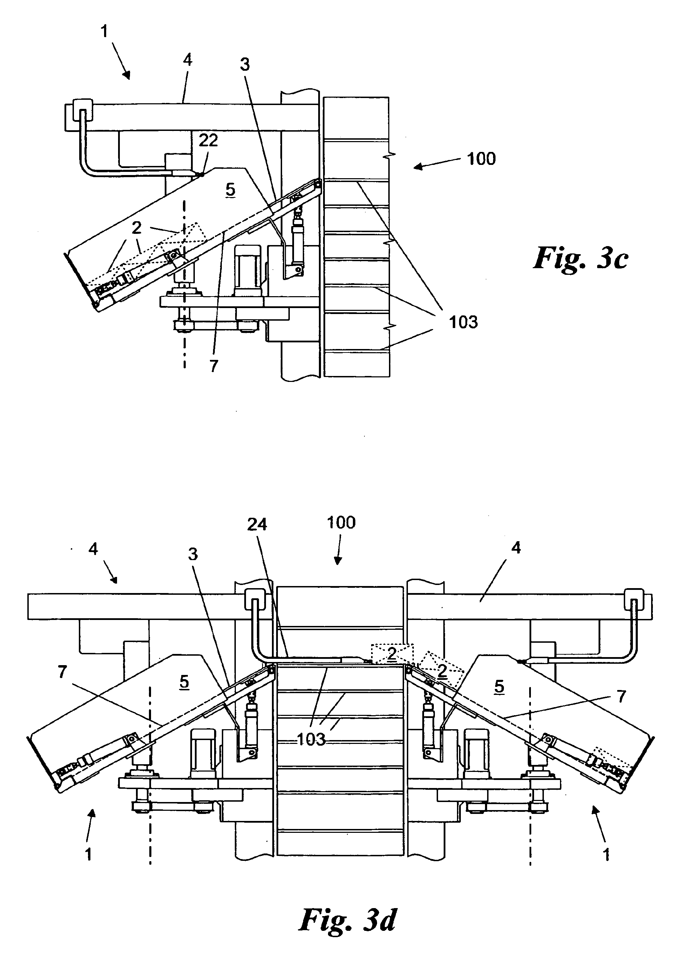

In this case, rotation of the supporting section 3 around the rotational hinge 12 positions the same to the loading configuration, as illustrated in Fig. 2a and 2b, or to the unloading configuration, as illustrated in Fig. 3a, 3b and 3c.

In particular, in the loading configuration, the upper surface of the supporting section 3 is positioned horizontally and is therefore suitable for maintaining an object 2 in a stable equilibrium. In the unloading configuration, on the other hand, the upper surface of the supporting section 3 is substantially aligned with the supporting surface 7 of the container 5.

Alternatively, the supporting section 3 can consist of a conveyor belt which is activated in the unloading configuration and is suitable for transferring the objects 2 to the container 5, while in the loading configuration it remains fixed. Said supporting section 3 could therefore also constitute, if activated in the direction opposite to the unloading configuration, at least part of the conveying means 6.

The supporting section 3 is rotated around the hinge 12 preferably by means of a second hydraulic cylinder **14** hinged to a supporting arm **15** in turn integral with the container 5.

Appropriately, the supporting surface 7 of the container 5, the position of which preferably influences also the position of the supporting section 3 in the unloading configuration and the position of the movable panel 9 in the opening position, develops along a slanting plane **7a** which has an inclination of the angle α, with respect to the horizontal direction, of between 5° and 60° and preferably between 25° and 35°, as illustrated in Fig. 4a.

Said arrangement means that the supporting section 3, when positioned in the unloading configuration (Fig. 3a, 3b and 3c), is suitable for transferring by gravity any objects 2 supported by the same. It is furthermore possible to provide different geometrical positions or configurations so that the objects 2 are conveyed by gravity from the supporting section 3 in the unloading configuration to the collecting container 5.

The described arrangement of the container 5 furthermore allows the panel 9 in the opening position (Fig. 4b) to transfer objects 2, contained in said container 5, by gravity via the upper surface of said movable panel 9 in order to convey them, for example, to the unloading area 105.

In fact, the objects 2 contained in the collecting container 5 remain in a stable equilibrium in said container 5 against the movable panel 9 when the latter is in the closing position. When the movable panel 9 is in the opening position, on the other hand, the objects 2 are transferred via the same panel 9 which therefore constitutes a preferred embodiment of the described conveying means 6.

Furthermore, the supporting surface 7, the supporting section 3, in the unloading configuration, and the movable panel 9 in the opening position preferably form a substantially continuous surface (Fig. 4b), developing along the inclined plane 7a and therefore suitable for constituting a sliding surface for the objects 2.

The transfer unit 13 can furthermore be preferably rotated around a rotation axis **13c** appropriately parallel to the vertical direction 100a and appropriately positioned near the centre of gravity of said transfer unit 13.

The device 1 is provided with rotation means **16** appropriately comprising a rotation shaft **17**, linked to the transfer unit 13, and in particular to the container 5 and connected, via rotary bearings **18**, to a platform **19**. The same rotation means 16 furthermore comprise a first rotational motor **20**, appropriately electric, and a transfer belt suitable for connecting the rotation of the motor 20 to the rotation of the shaft 17 via pulleys or similar.

The rotation means 16 are positioned on a platform **19**, which can be translated together with the device 1 and is fixed with respect to the rotation of the unit 13. The rotation means 16 maintain the described inclination of the angle α of the container 5, since the rotation axis 13c is vertical.

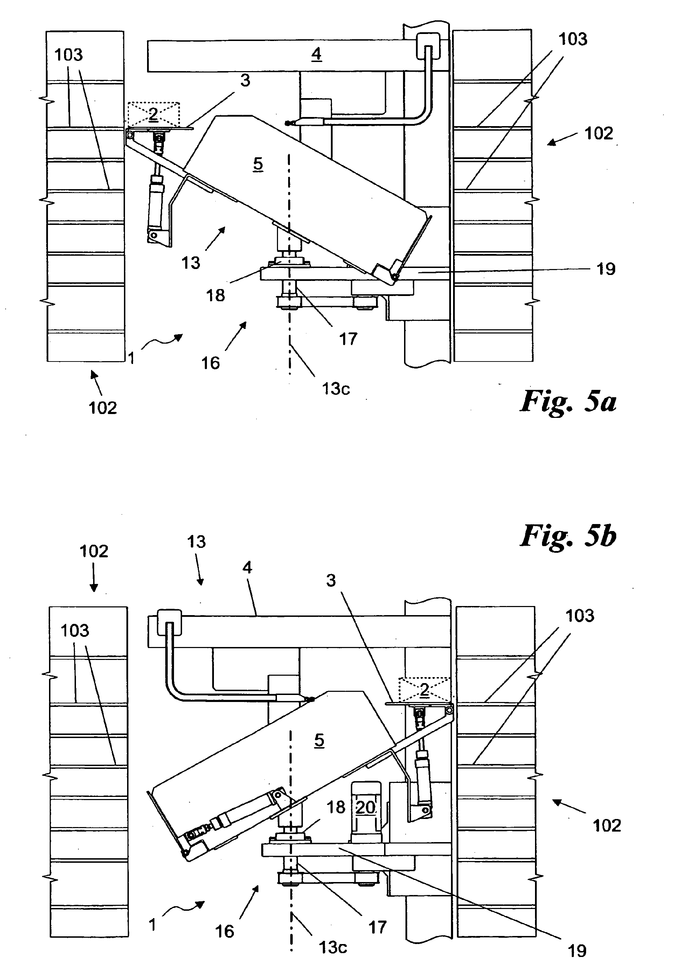

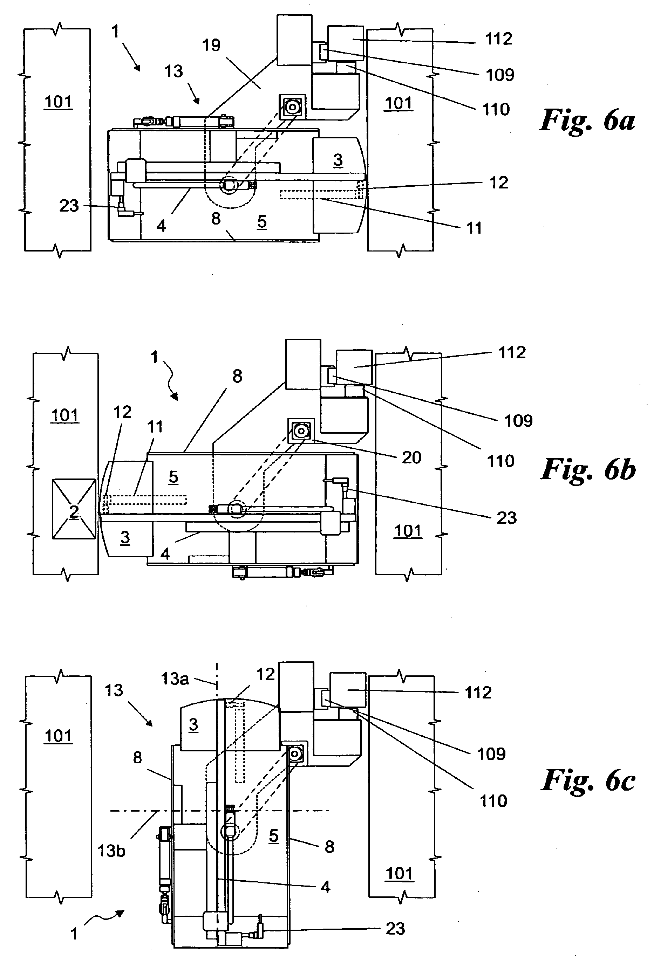

The transfer unit 13 is suitable for rotating around the rotation axis 13c by at least one straight angle and preferably three quarters of a round angle or one whole round angle. In particular the transfer unit 13 can set to the two positions in which the first axis number 13a (Fig. 5a, 5b, 6a and 6b) is parallel to the transverse direction 100c and to at least one of the positions in which the first axis 13a is parallel to the longitudinal direction 100b (Fig. 4a, 4b and 6c).

The movement mechanism **4** is also part of the transfer unit 13 and is linked to the container 5 by means of an arm **21.**

It operates preferably by means of suction cups **22**, suitable for attaching or releasing the objects 2.

Said suction cups 22 are known per se and controlled by means of a suction or blowing system **23** which can be controlled via the control means 106 of the automatic shelf unit 200.

The suction cups 22 are supported by a movement arm **24** suitable for translating parallel to the first axis 13a, as illustrated for example in Fig. 3a-3c.

The movement arm 24 is appropriately supported and moved by a translation device comprising: a supporting bar, integral with the container 5 and in particular with the arm 24, a translation track, suitable for sustaining the arm 24 and permitting translation thereof, a second rotational motor, linked to the bar and connected by means of a drive belt and pulleys to the movement arm 24.

The movement arm 24 furthermore structurally consists of a curved rod positioned at least partially parallel to the first axis 13a and centrally in the direction of the second axis 13b with respect to the supporting surface 3. The same arm 24 is furthermore positioned so as to support the suction cups 22 at a short distance, in the vertical direction 100a, from the supporting surface 3, thus permitting conveying of the objects 2 with compact height.

The transfer unit 13, as previously described, is supported by a movable platform 19. Said platform 19 consists substantially of a metal plate suitable for supporting the transfer unit 13, the first motor 20 and if necessary part of the control means 106.

Said platform moves in a vertical direction 100a and in a longitudinal direction 100b and is driven by drive means in the vertical direction **120a** and drive means in the horizontal direction **120b**.

In particular, the drive means in the vertical direction 120a comprise tracks **109** which develop in a vertical direction 100a and drive elements **110** suitable for transmitting the movement of an electric motor.

The first transmission elements 110 preferably consist of a transmission belt or a worm screw.

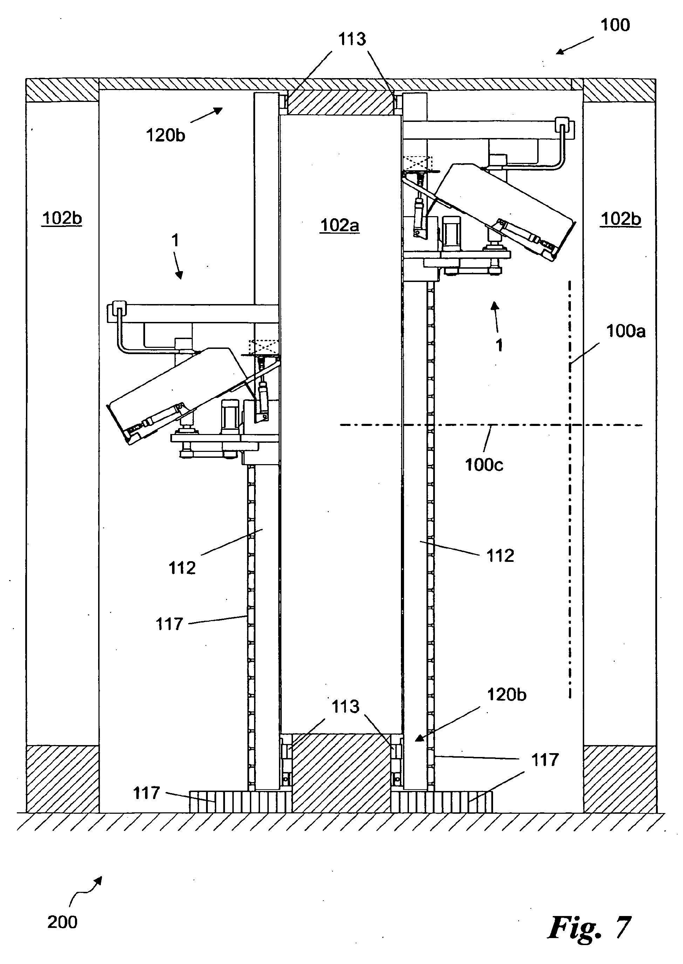

Furthermore, the drive means in the vertical direction 120a are appropriately attached to a vertical beam **112**, which can be moved in the longitudinal direction 100b and extends appropriately throughout the height of the shelves 102, as illustrated in Fig. 7.

The drive means in the horizontal direction 120b comprise, in fact, two second tracks **113** positioned at the upper and lower ends of the vertical movable beam 112 and constraining the same.

Said second tracks 113 develop mainly in a longitudinal direction 100b and extend preferably along the entire length of the accumulation units 102a.

The drive means in the horizontal direction 120b furthermore comprise an electric motor and transmission elements, consisting in particular of a transmission belt, for driving the vertical movable beam 112.

Lastly, channels **117** are provided suitable for containing a plurality of flexible cables connected to the device 1 and control means 106. Said channels 117 permit movement of the device 1 and continuous connection of said device 1, which can move in a vertical direction 100a and longitudinal direction 100b and rotate around the axis 13c, to the control means 106 which are fixed with respect to the shelves 102.

In particular, two channels 117 are provided, a first channel positioned along the horizontal plane and at ground level and a second channel positioned near the vertical movable beam 112. The same are furthermore suitable for conveying the cables of the electrical supply, the motors and the various control devices and the pneumatic supply cables for the hydraulic cylinders and the suction cups 22.

The automatic shelf unit 200, which preferably comprises at least one central unit 102a facing onto two side shelves 102b, as previously described, preferably comprises two transfer devices 1.

Each of said transfer devices 1 moves independently of the other via the drive means 120a and 120b, previously described and appropriately positioned corresponding to the central unit 102a.

In particular, as illustrated in Fig. 8 and 9, the said vertical movable beams 112 and the tracks 113 are linked to the central unit 102a.

The operation of a transfer device 1 and an automatic shelf unit 200, described above in structural terms, is as follows.

In a first situation it is necessary to store an object 2 on a storage surface 101, in particular a shelf 103 of an accumulation unit 102.

In said situation, the user must place one or more objects 2 in the loading area 104. Said operation can be performed manually and/or with the help of a conveyor belt or a device to isolate individual objects 2, as previously described.

In the vicinity of said loading area, any identification of the objects 2 can be performed, via the identification means 107.

Said operations serve to catalogue the object 2 and to prepare its position on the shelves 102.

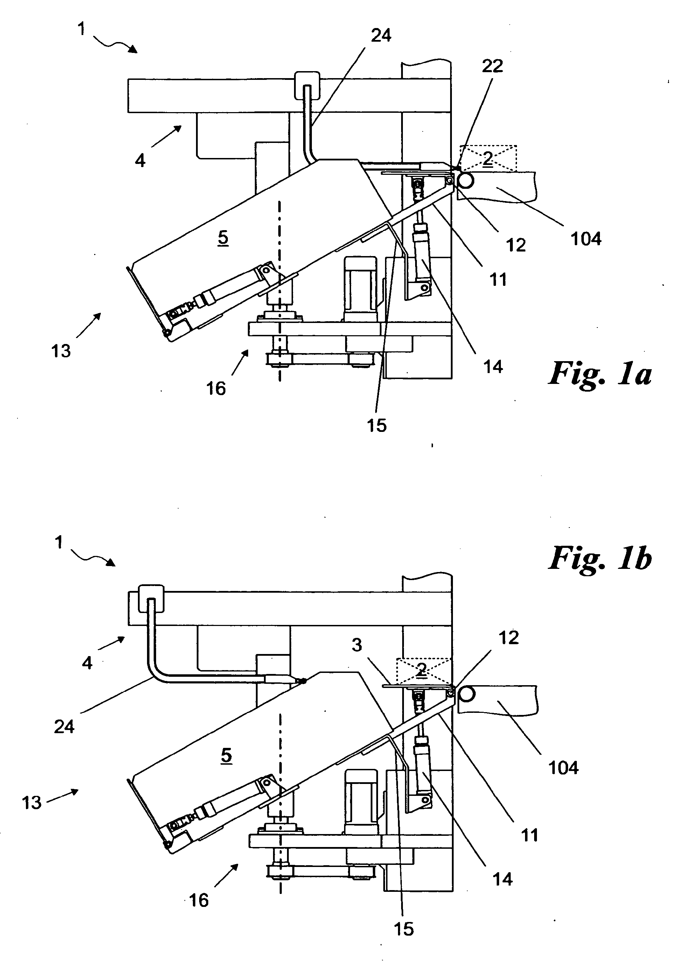

The device 1 is then moved as illustrated in Fig. 1a and 1b.

In particular, said device 1 translates in the vertical direction 100a and longitudinal direction 100b, positioning itself in the loading area 104 as illustrated in Fig. 1a.

Subsequently, the movement arm 24 translates parallel to the first axis 13a until the suction cups 22 come into contact with the object 2.

At this point the suction or blowing system 23 sucks air via the suction cups 22 thus determining attachment of said suction cups 22 to the object 2.

The movement arm 24 subsequently translates in the opposite direction (Fig. 1b) and conveys the object 2 to the supporting section 3, appropriately positioned in the loading configuration and therefore suitable for maintaining the object 2 in a stable equilibrium.

When the object 2 has reached the supporting section 3, the suction and blowing system 23 emits air via the suction cups 22, thus detaching the suction cups 22 from the object 2. The arm 24 then retracts to stroke end, without taking the object 2 with it, while the latter is positioned in stable equilibrium on the supporting section 3.

Subsequently the device 1 will position the object 2 on a storage surface 101 and in particular a shelf 103.

The same device 1 then translates in the vertical direction 100a and longitudinal direction 100b to the shelf 103.

At this point, if the shelf unit 100 comprises two accumulation units 102 facing each other, as illustrated in Fig. 5a-6b, the device 1 will set to a first position (Fig. 5a and 6a) or a second position (Fig. 5b and 6b) to face a first or a second accumulation unit 102.

Said rotation around the axis of rotation 13c is performed by means of the described first motor 20 and the described means and involves the entire transfer unit 13.

The supporting section 3 in both the positions is therefore substantially in contact with the edge of the storage surface 101 and in particular the edge of the shelves 103. In order, therefore, to permit rotation of the transfer unit 13 and to prevent the contact between a portion of the same and a shelf 103, the opposite side near the storage surface 101 of the supporting section 3 is arc-shaped (Fig. 6a-6c) with centre substantially corresponding to the rotation axis 13c. The rear part of the container 5 is substantially contained, in an overhead projection, in the circumference that defines said arc.

Once the supporting section 3 is positioned beside the shelf 103, the movement mechanism 4 transfers the object 2 from the supporting section to the storage surface 101. Said transfer, illustrated in Fig. 2a and 2b, is performed in reverse with respect to the transfer described above with reference to the loading of an object 2. It can nevertheless be performed also without the intervention of the suction or blowing system 23, since the object 2 only has to be pushed onto the storage surface 101 and therefore does not have to be gripped by the suction cups 22.

The device 1, or devices 1, then load the objects 2 onto the storage surfaces 101 while the control means 106 keep the position of said objects 2 and any other data in memory.

When, on the other hand, it is necessary to withdraw one or more objects 2, retrieval of the same from the storage surfaces 101 must be performed.

In said case, the device 1 is positioned so that the supporting section 3 faces the shelf 103. The movement mechanism 4 then performs substantially the same operation as the one described for the loading phase. In this phase, however, the supporting section 3 is preferably kept in the unloading configuration.

Consequently, the objects 2 do not remain in equilibrium on the supporting section but are transferred by gravity to the container 5 along the supporting surface 7.

Several objects can therefore be withdrawn simultaneously since the same container 5 is suitable for containing a plurality of objects 2.

Said retrieval phase is illustrated in Fig. 3a-3c.

Alternatively, if two devices 1 are provided and the objects 2 are positioned consecutively on a central unit 102a, the retrieval phase can be performed by both the devices 1.

In this latter case it is expedient for both the devices 1 to be aligned on two different sides of the shelf 103 and for a first device 1, via the movement mechanism 4, to push said objects 2 into the container 5 of the second device 1, as illustrated in Fig. 3d.

Lastly, after the objects 2 have been loaded into the containers 5, said objects 2 must be discharged into the unloading area 105, which can be easily accessed by the users by means of a conveyor belt. In particular, the unloading area 105 is often positioned facing along a line perpendicular to the accumulation units 102.

The device 1 then performs a rotation of 90° and is positioned as illustrated in Fig. 6c and 4a-4b.

At this point said device 1 is translated so as to substantially position the movable panel 9 near the unloading area 105, as illustrated in Fig: 4a.

Subsequently, as illustrated in Fig. 4b, the movable panel is set to the opening position.

As previously described, the objects 2 are appropriately contained in the container 5 in a stable equilibrium against the movable panel 9 in the closing position. Consequently, when said movable panel 9 is set to the opening position, said objects 2 slide along said panel 9 and are discharged into the unloading area 105.

When the automatic shelf unit 200 comprises two or more devices 1, the latter can act independently and perform different phases simultaneously. For example one can load some objects 2 while the other can unload different objects 2. The invention offers important advantages.

The device 1 is particularly simple and able to perform any operation by means of one single movement arm 24 and by means of two simple plates that can be rotated consisting of the supporting section 3 and the movable panel 9.

Furthermore, due to rotation of the transfer unit 13 substantially around its own centre of gravity and due to the particular shape of the supporting section 3 and the container 5, the device 1 occupies a very small space in the transverse direction 100c with respect to its capacity.

Another advantage of the device 1 is the presence of the container 5 which permits the storage of a plurality of objects 2 during the unloading phase.

Consequently, the unloading phase is very rapid because it is not necessary for the device 1 to perform a stroke and an unloading operation for each object.

This advantage is very important, since the unloading phase requires a higher speed than the loading phase as it is performed immediately after the order is received, whereas the loading phase can be performed also at night or during closing times.

In particular, the container 5 is suitable for containing at least three or four objects 2 which constitute the average number of objects 2 requested in a shop in one single order.

A further advantage of the automatic shelf 200 including one or more devices 1 is represented by the versatility of the latter.

In fact, the same can operate simultaneously or independently. They can act as a simple container or as a loading and unloading element. They can furthermore each operate on two facing shelf units.

The automatic shelf unit 200 therefore permits simultaneous loading and unloading of the objects 2 or a considerable increase in the speed of one of the two operations.

## Claims

1. Transfer device (1) for objects (2) which can be combined with a shelf unit (100), said shelf unit (100) comprising at least one storage surface (101), a loading area (104) and an unloading area (105), said device (1) being movable vis-à-vis said shelf unit (100) and comprising: a supporting section (3), suitable for supporting at least one of said objects (2), a movement mechanism (4), suitable for transferring at least one object (2) between said supporting section (3) and one of said storage surfaces (101) or loading or unloading areas (104, 105) and linked to said supporting section (3), **characterised in that** it comprises a collecting container (5) suitable for containing a plurality of objects (2) and linked to said supporting section (3), and **in that** said supporting section (3) can move between a loading configuration, in which it supports at least one of said objects (2), and an unloading configuration, in which said at least one object (2) is transferred by gravity into said collecting container (5).

2. Device according to claim 1, wherein said supporting section (3), collecting container (5) and movement mechanism (4) define a transfer unit (13) and wherein said device (1) comprises rotation means (16) suitable for rotating said transfer unit (13) around a substantially vertical axis of rotation (13a) intersecting said transfer unit (13).

3. Device as claimed in claim 2, wherein said axis of rotation (13a) intersects said transfer unit (13) near its centre of gravity.

4. Device as claimed in one or more of the preceding claims, comprising conveying means (6) suitable for transferring said objects (2) contained in said container (5) to said unloading area (105).

5. Device as claimed in claim 4, wherein said collecting container (5) comprises a supporting surface (7) and a movable panel (9), available in the opening and closing position, wherein said objects (2) contained in said collecting container (5) are sustained by said supporting surface (7) against said movable panel (9) in the closing position, and wherein said conveying means (6) consist of said movable panel (9) in the opening position.

6. Device as claimed in claim 5, wherein said supporting section (3) in the unloading configuration, said supporting surface (7) and said movable panel (9) in the opening position lie substantially along one single inclined plane (7a) and substantially form a continuous surface.

7. Device as claimed in claim 6, wherein said inclined plane (7a) has an inclination of the angle α with respect to the horizontal direction of between 25° and 35°.

8. Device as claimed in one or more of the claims 5-7, wherein said movable panel (9) is moved by means of a first hydraulic cylinder (10) integral with said container (5).

9. Device as claimed in one or more of the preceding claims, wherein said supporting section (3) consists substantially of a plate linked to said container (5) by means of a rotational hinge (12) having a horizontal rotation axis.

10. Device as claimed in one or more of the preceding claims, wherein said movement mechanism (4) is linked to said container (5) and comprises one single movement arm (24) suitable for translating in a horizontal direction.

11. Automatic shelf unit (200) comprising a shelf unit (100) including at least one storage surface (101), a loading area (104) and an unloading area (105), and at least one transfer device (1) as claimed in one or more of the preceding claims.

12. Automatic shelf unit (200) as claimed in claim 11, wherein said shelf unit (100) comprises at least two accumulation units (102) facing each other, wherein said supporting section (3), collecting container (5) and movement mechanism (4) define a transfer unit (13) and wherein said transfer device (1) comprises rotation means (16) suitable for rotating said supporting unit (13) around a substantially vertical rotation axis (13a) intersecting said movement unit (13) and for selectively positioning said supporting section (3) in the vicinity of one of said accumulation units (102).

13. Automatic shelf unit (200) as claimed in claim 11 or 12, wherein said shelf unit (100) comprises at least one group of three of said accumulation units (102), including a central unit (102a) and two lateral units (102b) and wherein said central unit (1 02a) faces both said lateral units (102b).

14. Automatic shelf unit (200) as claimed in claim 13, comprising two of said transfer devices (1), selectively positioned between said central unit (102a) and one of said lateral units (102b).

15. Automatic shelf unit (200) as claimed in claim 14, wherein said transfer devices (1) can be operated independently or together.

## Patentansprüche

1. Vorrichtung für den Transfer (1) von Objekten (2) zur Kombination mit einer Regaleinheit (100), wobei genannte Regaleinheit (100) mindestens eine Lagerfläche (101), eine Ladezone (104) und eine Entladezone (105) umfasst, wobei genannte Vorrichtung (1) an genannter Regaleinheit (100) beweglich ist und umfasst: eine Stützfläche (3), die in der Lage ist, mindestens eines der genannten Objekte (2) zu tragen, einen Bewegungsmechanismus (4), der in der Lage ist, mindestens ein Objekt (2) zwischen der genannten Auflagefläche (3) und einer der genannten Lagerflächen (101) oder Lade- oder Entladezonen (104, 105) zu befördern und an genannter Stützfläche (3) fest angebracht ist, **dadurch gekennzeichnet, dass** sie einen Sammelbehälter (5) umfasst, der in der Lage ist, eine Mehrzahl von Objekten zu enthalten und an genannter Stützfläche (3) fest angebracht ist und dass genannte Stützfläche (3) zwischen einer Ladekonfiguration, in der sie mindestens eine Objekt (2) trägt und einer Entladekonfiguration, in der das Objekt (2) durch Schwerkraft in den genannten Sammelbehälter (5) befördert wird, beweglich ist.

2. Vorrichtung nach Anspruch 1, in der die genannten Stützflächen (3), der Sammelbehälter (5) und der Bewegungsmechanismus (4) eine Transfereinheit (13) definieren und in der genannte Vorrichtung (1) Drehungsmittel (16) umfasst, die in der Lage sind, genannte Transfereinheit (13) um eine im Wesentlichen vertikale, die genannte Transfereinheit (13) schneidende Drehungsachse (13a) zu drehen.

3. Vorrichtung nach Anspruch 2, in der genannte Drehungsachse (13a) die genannte Transfereinheit (13) in der Nähe ihres Schwerpunktes schneidet.

4. Vorrichtung nach einem oder mehreren der vorstehenden Ansprüche, die Fördermittel (6) umfasst, welche in der Lage sind, die in genanntem Behälter (5) enthaltenen Objekte (2) in genannte Entladezone (105) zu befördern.

5. Vorrichtung nach Anspruch 4, in der genannter Sammelbehälter (5) eine Stützfläche (7) und ein bewegliches Element (9) umfasst, das in einer geöffneten und in einer geschlossenen Position zu Verfügung steht, in der die genannten in genanntem Sammelbehälter (5) enthaltenen Objekte (2) von einer Auflagefläche (7) gegen das genannte bewegliche Element (9) in geschlossener Position getragen werden und in der die genannten Fördermittel (6) aus dem genannten beweglichen Element (9) in geöffneter Position bestehen.

6. Vorrichtung nach Anspruch 5, in der sich genannte Stützfläche (3) in Entladekonfiguration, die genannte Auflagefläche 7 und das genannte bewegliche Element (9) in geöffneter Position im Wesentlichen entlang einer einzigen schrägen Ebene (7a) befinden und im Wesentlichen eine durchgehende Oberfläche bilden.

7. Vorrichtung nach Anspruch 6, in der die Neigung der genannten Schrägfläche (7a) zur horizontalen Richtung einem Winkel α zwischen 25° und 35° entspricht.

8. Vorrichtung nach einem oder mehreren der Ansprüche 5-7, in der genanntes bewegliches Element (9) durch einen mit genanntem Behälter (5) fest verbundenen ersten Hydraulikzylinder (10) bewegt wird.

9. Vorrichtung nach einem oder mehreren der vorstehenden Ansprüche, in der die genannte Stützfläche (3) im Wesentlichen aus eine Platte besteht, die mit genanntem Behälter durch ein Drehgelenk (12) mit horizontaler Drehachse verbunden ist.

10. Vorrichtung nach einem oder mehreren der vorstehenden Ansprüche, in der der genannte Bewegungsmechanismus (4) mit genanntem Behälter (5) verbunden ist und einen einzigen Bewegungsarm (24) umfasst, der in der Lage ist, in horizontale Richtung zu verschieben.

11. Automatische Regaleinheit (200), umfassend eine Regaleinheit (100), die mindestens eine Lagerfläche (101), eine Ladezone (104) und eine Entladezone (105) und mindestens eine Vorrichtung für den Transfer (1) nach einem oder mehreren der vorstehenden Ansprüche umfasst.

12. Automatische Regaleinheit (200) nach Anspruch 11, in der die genannte Regaleinheit (100) mindestens zwei gegenüberliegende Anhäufungseinheiten (102) umfasst, in der die genannte Stützfläche (3), der Sammelbehälter (5) und der Bewegungsmechanismus (4) eine Transfereinheit (13) definieren und in der die genannte Vorrichtung für den Transfer (1) Drehmittel (16) umfasst, die in der Lage sind, genannte Stützeinheit (13) um eine im Wesentlichen vertikale, die genannte Bewegungseinheit (13) schneidende Drehachse (13a) zu drehen und die genannte Stützfläche (3) wahlweise in der Nähe von einer der genannten Anhäufungseinheiten (102) zu positionieren.

13. Automatische Regaleinheit (200) nach Anspruch 11 oder 12, in der genannte Regaleinheit (100) mindestens eine Einheit aus drei der genannten Anhäufungseinheiten (102) umfasst, enthaltend eine zentrale Einheit (102a) und zwei seitliche Einheiten (102b) und in der die genannte zentrale Einheit (102a) gegenüber von beiden der genannten seitlichen Einheiten (102b) liegt.

14. Automatische Regaleinheit (200) nach Anspruch 13, umfassend zwei der genannten Transfervorrichtungen (1), wahlweise angeordnet zwischen der genannten zentralen Einheit (102a) und einer der genannten seitlichen Einheiten (102b).

15. Automatische Regaleinheit (200) nach Anspruch 14, in der die genannten Vorrichtungen für den Transfer (1) unabhängig oder gemeinsam gesteuert werden können.

## Revendications

1. Dispositif de transfert (1) d'objets (2) à combiner avec une unité d'étagère (100), ladite unité d'étagère (100) comprenant au moins une surface d'emmagasinage (102), une aire de chargement (104) et une aire de déchargement (105), ledit dispositif (1) étant mobile en correspondance de ladite unité d'étagère (100) et comprenant: un plan de support (3), apte à soutenir au moins un desdits objets (2), un mécanisme de manutention (4), apte à transférer au moins un objet (2) entre ledit plan de support (3) et une desdites surfaces d'emmagasinage (101) ou aires de chargement ou déchargement (104, 105) et fixé audit plan de support (3), **caractérisé en ce qu'**il comprend un récipient de collecte (5) apte à contenir une pluralité d'objets (2) et fixé audit plan de support (3), et **en ce que** ledit plan de support (3) est mobile entre une configuration de chargement, à laquelle il soutient au moins un desdits objets (2) et une configuration de déchargement à laquelle ledit au moins un objet (2) est transféré par gravité dans ledit récipient de collecte (5).

2. Dispositif selon la revendication 1, dans lequel lesdits plan de support (3), récipient de collecte (5) et mécanisme de manutention (4) définissent un groupe de transfert (13) et dans lequel ledit dispositif (1) comprend des moyens de rotation (16) aptes à causer la rotation dudit groupe de transfert (13) autour d'un axe de rotation (13a) sensiblement vertical coupant ledit groupe de transfert (13).

3. Dispositif selon la revendication 2, dans lequel ledit axe de rotation (13a) coupe ledit groupe de transfert (13) à proximité de son centre de gravité.

4. Dispositif selon une ou plusieurs des revendications précédentes, comprenant des moyens de transport (6) aptes à transférer lesdits objets (2) contenus dans ledit récipient (5) à ladite aire de déchargement (105).

5. Dispositif selon la revendication 4, dans lequel ledit récipient de collecte (5) comprend une surface d'appui (7) et une porte mobile (9), disponible en position d'ouverture et en position de fermeture, dans lequel lesdits objets (2) contenus dans ledit récipient de collecte (5) sont soutenus par ladite surface d'appui (7) contre l'action de ladite porte mobile (9) en position de fermeture, et dans lequel lesdits moyens de transport (6) se composent de ladite porte mobile (9) en position d'ouverture.

6. Dispositif selon la revendication 5, dans lequel ledit plan de support (3) en configuration de déchargement, ladite surface d'appui (7) et ladite porte mobile (9) en position d'ouverture sont disposés essentiellement le long d'un seul couloir (7a) et forment essentiellement une surface continue.

7. Dispositif selon la revendication 6, dans lequel ledit couloir (7a) a une inclinaison d'un angle α compris entre 25° et 35° par rapport à la direction horizontale.

8. Dispositif selon une ou plusieurs des revendications 5-7, dans lequel ladite porte mobile (9) est mue par un premier cylindre oléohydraulique (10) solidaire dudit récipient (5).

9. Dispositif selon une ou plusieurs des revendications précédentes, dans lequel ledit plan de support (3) se compose essentiellement d'une plaque fixée audit récipient (5) par une charnière de rotation (12) ayant un axe de rotation horizontal.

10. Dispositif selon une ou plusieurs des revendications précédentes, dans lequel ledit mécanisme de manutention (4) est fixé audit récipient (5) et comprend un seul bras de manutention (24) apte à effectuer une translation en direction horizontale.

11. Unité d'étagère automatique (200), comprenant une unité d'étagère (100) qui comprend au moins une surface d'emmagasinage (101), une aire de chargement (104) et une aire de déchargement (105), et au moins un dispositif de transfert (1) selon une ou plusieurs des revendications précédentes.

12. Unité d'étagère automatique (200) selon la revendication 11, dans laquelle ladite unité d'étagère (100) comprend au moins deux unités d'accumulation (102) réciproquement en vis-à-vis, dans laquelle lesdits plan de support (3), récipient de collecte (5) et mécanisme de manutention (4) définissent un groupe de transfert (13) et dans laquelle ledit dispositif de transfert (1) comprend des moyens de rotation (16) aptes à causer la rotation dudit groupe de transfert (13) autour d'un axe de rotation (13a) essentiellement vertical coupant ledit groupe de transfert (13) et à disposer ledit plan de support (3) sélectivement à proximité de l'une desdites unités d'accumulation (102).

13. Unité d'étagère automatique (200) selon la revendication 11 ou 12, dans laquelle ladite unité d'étagère comprend au moins un groupe de trois desdites unités d'accumulation (102) comprenant une unité centrale (102a) et deux unités latérales (102b) et dans laquelle ladite unité centrale (102a) est en vis-à-vis des deux unités latérales (102b).

14. Unité d'étagère automatique (200) selon la revendication 13, comprenant deux desdits dispositifs de transfert (1), sélectivement disposés entre ladite unité centrale (102a) et une desdites unités latérales (102b).

15. Unité d'étagère automatique (200) selon la revendication 14, dans laquelle lesdits dispositifs de transfert (1) peuvent être entraînés en mouvement indépendamment l'un de l'autre.
